# EUROPEAN PATENT APPLICATION

(11) **EP 3 895 940 A1**
(43) Date of publication of application: **20.10.2021**
(21) Application number: 19892197.5
(22) Date of filing: 21.03.2019
(51) Int. Cl.: B60S 5/06

(54) **MODULAR BATTERY SWAP PLATFORM, MODULE ASSEMBLY, MODULE, AND CHARGING AND BATTERY SWAP SYSTEM**

(30) Priority: 07.12.2018 CN 201822050647 U
(71) Applicant: NIO (ANHUI) HOLDING CO., LTD, Economic and Technological Development Zone Hefei Anhui 230601 (CN)
(72) Inventor: SUN, Chuangcheng, Hong Kong (CN); YANG, Chao, Hong Kong (CN); ZHAO, Zhiling, Hong Kong (CN); WANG, Zheng, Hong Kong (CN)
(74) Representative: Vossius & Partner Patentanwälte Rechtsanwälte mbB
(86) International application number: PCT/CN2019/079060
(87) International publication number: WO 2020/113854

(57) **Abstract**

Disclosed are a modular battery swap platform, a module assembly and modules for the battery swap platform, and a battery charging and swapping system. The modular battery swap platform comprises at least two modules configured to be detachably assembled together so as to form the modular battery swap platform for battery swap of a vehicle. By means of the battery swap platform, component modules can be separately manufactured and transported, and assembled on site, so that the difficulty of mounting operation can be effectively reduced, time and efforts can be saved, and the applicability of the battery swap platform can be improved.

## Description

### Technical Field

The invention relates to the technical field of battery charging and swapping, in particular to a modular battery swap platform, a module assembly and modules for the battery swap platform, and a battery charging and swapping system.

### Background Art

With the progress of science and technology and the development of society, various types of new energy vehicles such as battery electric vehicles and hybrid vehicles are increasingly widely used. In terms of these new types of vehicles, aspects involving quick battery swapping, etc. have become more and more important. For example, battery power replenishment time will be an important indicator in order to achieve a vehicle battery power replenishment experience surpassing the traditional vehicle refueling experience. Battery swapping is a way to achieve quick power replenishment. Before breakthrough progress is made in battery technology and an available safe and quick charging technology occurs, battery swapping will still be the most possible way to achieve a vehicle battery power replenishment time that can be comparable to or even superior to the refueling time for traditional vehicles. Although various battery swap apparatuses, devices or systems have been developed, they still have problems such as complex overall structure, inconvenience in manufacturing and transportation, and difficult and time-consuming in installation (such as hoisting and calibration) operation.

### Summary of the Invention

In view of the above, the invention provides a modular battery swap platform, a module assembly and modules for a battery swap platform, and a battery charging and swapping system, thereby effectively solving or alleviating one or more of the above problems and others existing in the prior art.

First, according to a first aspect of the invention, provided is a modular battery swap platform. The modular battery swap platform comprises at least two modules configured to be detachably assembled together so as to form the modular battery swap platform for battery swap of a vehicle.

In the modular battery swap platform according to the invention, optionally, at least one of the modules is constructed as a frame structure, and the bottom of the frame structure is provided with an assembling member for fixing it to a mounting position.

In the modular battery swap platform according to the invention, optionally, the bottom and sides of the frame structure are enclosed to form an internal cavity for components and parts to be placed therein, and the top of the frame structure is provided with a covering member configured to at least partially enclose the internal cavity and can be opened to expose the internal cavity to the outside; and/or the bottom, sides and/or top of the frame structure is provided with connecting members configured to connect the modules with modules adjacent thereto.

In the modular battery swap platform according to the invention, optionally, the modular battery swap platform is provided with a ramp portion for a vehicle to enter or exit, a wheel positioning portion for wheel positioning operation, a battery swap portion for battery swap operation, and a control portion for controlling operation of the modular battery swap platform, and at least one of the ramp portion, the wheel positioning portion, the battery swap portion and the control portion is configured to have one or more of the modules, or at least two of these portions are configured together as one of the modules.

In the modular battery swap platform according to the invention, optionally, the ramp portion and the control portion are arranged at the front and rear of the modular battery swap platform, respectively; or
the ramp portion includes a front ramp portion and a rear ramp portion arranged at the front and rear of the modular battery swap platform, respectively, and the control portion is arranged at the side of the modular battery swap platform.

In a modular battery swap platform according to the invention, optionally, the ramp portion is configured to comprise at least two sections arranged to be at least partially stackable together.

In the modular battery swap platform according to the invention, optionally, the wheel positioning portion is configured to include a front wheel positioning portion and a rear wheel positioning portion, which are arranged at the front and rear of the battery swap portion, respectively; and/or
the control portion is configured to include at least two portions arranged at the rear and/or the side of the modular battery swap platform, respectively.

Second, according to a second aspect of the invention, provided is a module assembly for a battery swap platform. The module assembly comprises at least two modules configured to be detachably assembled together to form a modular battery swap platform as described in any one of the above.

Furthermore, according to a third aspect of the invention, further provided is a module for a battery swap platform. The module is configured to constitute a module assembly as described above.

In addition, according to a fourth aspect of the invention, further provided is a battery charging and swapping system. The battery charging and swapping system comprises one or more modular battery swap platforms as described in any one of the above.

The principles, characteristics, features and advantages of the technical solutions according to the invention will become apparent from the following detailed description in conjunction with the accompanying drawings. For example, compared with the prior art, by adopting the modular battery swap platform designed and provided by the invention, each component module can be conveniently manufactured and transported, and assembled on a working site, so that the difficulty of installation operation can be effectively reduced, saving time and efforts. In addition, various flexible modular layout designs may be made for the battery swap platform to meet different application needs, which can not only make the overall structure more compact and have a better aesthetic function, but can also enhance the applicability of the battery swap platform.

### Brief Description of the Drawings

The technical solutions of the invention will be further described in detail below with reference to accompanying drawing and embodiments. However, it should be understood that these drawings are designed merely to conceptually illustrate the structural construction described herein and are not necessarily drawn to scale.
Fig. 1 is a schematic perspective structural view of an embodiment of a modular battery swap platform according to the invention after assembly.
Fig. 2 is an exploded schematic structural view of the embodiment of the modular battery swap platform shown in Fig. 1.
Fig. 3 is a schematic view of a frame structure of the embodiment of the modular battery swap platform shown in Fig. 1.
Fig. 4 is a schematic perspective structural view of a ramp portion in an unfolded state of the embodiment of the modular battery swap platform shown in Fig. 1.
Fig. 5 is a schematic perspective structural view of the ramp portion in a folded state of the embodiment of the modular battery swap platform shown in Fig. 1.

### Detailed Description of Embodiments

First, it should be noted that the structures, compositions, features, and advantages of a modular battery swap platform, a module assembly and modules for the battery swap platform, and a battery charging and swapping system of the invention will be specifically described below by way of example. However, all the descriptions are for the purpose of illustration only and should not be construed as limiting the invention in any way. The technical term "battery" used herein includes, but is not limited to, a battery, a battery set, a battery pack, etc. for providing power to a vehicle, and the technical terms "upper", "lower", "right", "left", "front", "rear", "top", "bottom", derivatives thereof and the like should be taken in connection with the orientations in the drawings, and the invention may adopt various alternative orientations unless expressly stated otherwise.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein, and accordingly further embodiments according to the invention should be considered to be also within the scope of this disclosure. Furthermore, for the sake of simplifying the drawings, the same or similar parts and features may only be marked in one or several positions in the same drawing.

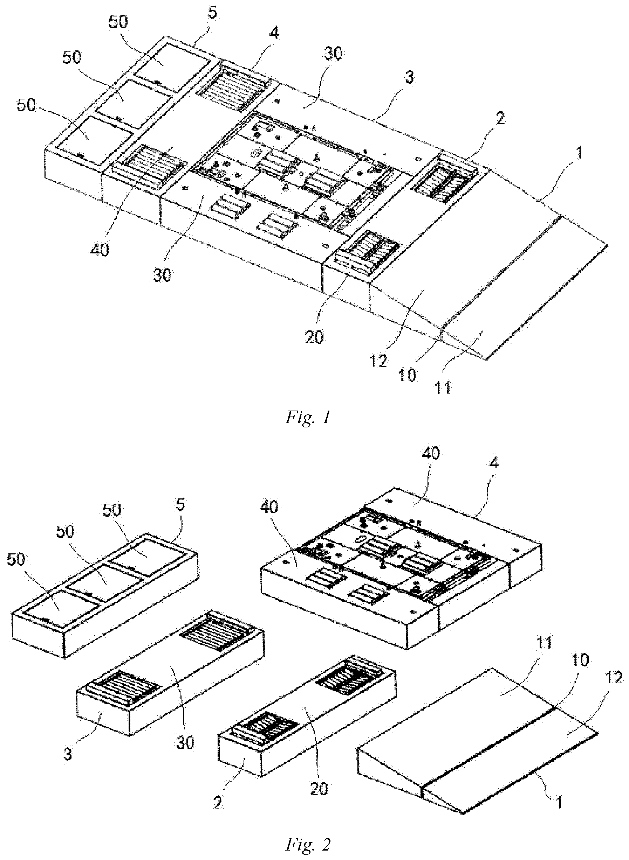

In general, the invention breaks through conventional designs that have been customary in the art, and innovatively employs a modular design concept to manufacture and assemble a battery swap platform. That is, by detachably assembling two or more modules according to actual application demands, the battery swap platform can be formed for vehicle battery swap operation. An embodiment of the battery swap platform according to the invention is exemplarily shown in Figs. 1 to 5, and the modular battery swap platform of the invention will be described in detail by way of this example in conjunction with these accompanying drawings.

Fig. 1 is a schematic perspective structural view of the embodiment of the modular battery swap platform after assembly, and the exploded structure of the embodiment of the modular battery swap platform is further illustrated in Fig. 2. As shown in Figs. 1 and 2, in this embodiment, the modular battery swap platform comprises a ramp portion 1, a front wheel positioning portion 2, a rear wheel positioning portion 3, a battery swap portion 4, and a control portion 5, all of which are illustratively made of one module.

In particular, only one ramp portion 1 is disposed in the above embodiment and is arranged at the front of the modular battery swap platform for a vehicle to drive into or out of the modular battery swap platform. The above arrangement would be very suitable for some places where installation space is limited, however, it should be understood that the invention allows the modular battery swap platform to be configured with both a front ramp portion and a rear ramp portion, the former may be arranged at the front of the modular battery swap platform so that the vehicle can drive from the front ramp portion into the modular battery swap platform, and the latter is arranged at the rear of the modular battery swap platform so that the vehicle can drive out of the modular battery swap platform from the rear ramp portion, for example, after completion of the battery swap operation.

In addition, in an alternative, the ramp portion (such as, the front ramp portion and the rear ramp portion) of the modular battery swap platform may be configured to be composed of two or more sections, these sections will be disposed to be stackable together so as to save space and facilitate transportation and on-site installation.

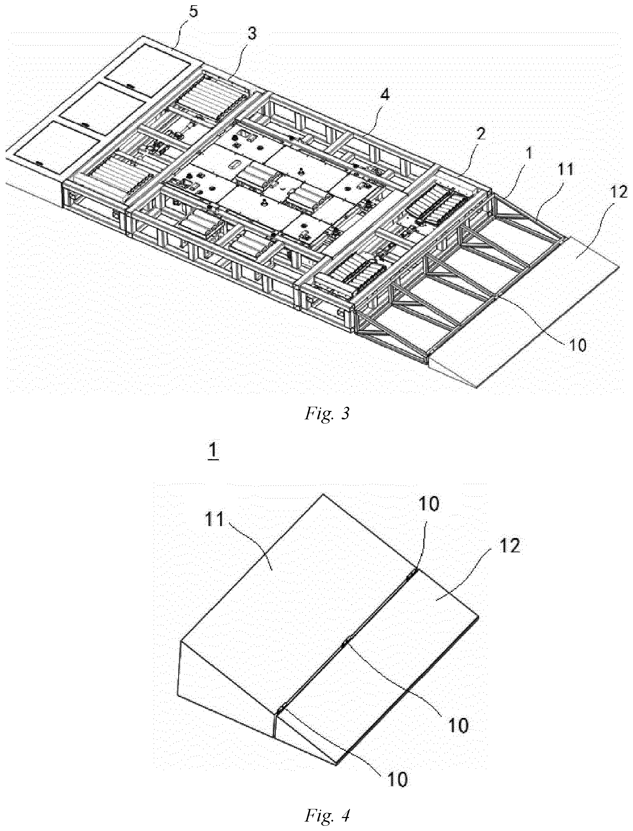

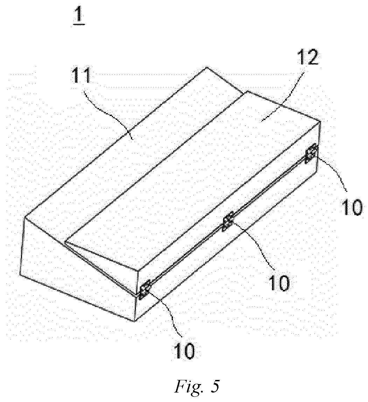

By way of example, as shown in Figs. 4 and 5, the ramp portion 1 in this embodiment may be constructed to have two sections 11 and 12 which may be connected by one or several pivotal connectors 10, such as hinges. The two above-mentioned sections 11 and 12 of the ramp portion 1 may be folded up together as shown in Fig. 5 during packaging and transportation, and are then unfolded as shown in Fig. 5 during on-site installation so as to form the complete ramp portion 1, thus it is very convenient, time-saving and effort-saving during packaging, transportation and installation.

The front wheel positioning portion 2 and the rear wheel positioning portion 3 are used for wheel positioning operation. As shown in Figs. 1 and 2, the front wheel positioning portion 2 employs the form of a separate module and is arranged at the front of the battery swap portion 4 while being adjacent to the ramp portion 1, and the rear wheel positioning portion 3 also employs the form of a separate module and is arranged at the rear of the battery swap portion 4 while being adjacent to the control portion 5.

It should be understood that in some embodiments, both the front wheel positioning portion 2 and the rear wheel positioning portion 3 may be manufactured together to form one separate module, and the function of the wheel positioning portion in the modular battery swap platform may then be provided by the separate module.

As for the battery swap section 4, it is arranged between the front wheel positioning portion 2 and the rear wheel positioning portion 3 described above, and forms an independent functional module for providing battery swap operation to a vehicle parked on the modular battery swap platform.

In the above embodiment, the control portion 5 is a separate module and is arranged at the rear of the modular battery swap platform. This is because only one ramp portion 1 is disposed in this example for the vehicle to drive into or out of the modular battery swap platform, that is, the vehicle will not drive into the rear area of the modular battery swap platform. Therefore, this area can be fully utilized for arranging the control portion 5 so as to conduct control operation on the modular battery swap platform.

In the prior art, a control cabinet and the battery swap platform are generally arranged independently, and such a layout has long been customary and been used by those skilled in the art and accordingly has become a standard configuration mode in the industry. Compared with the prior art, in this embodiment, the control portion 5 with the same or similar functions as the existing control cabinet is arranged in the battery swap platform in a hidden modular combination mode, which not only breaks through the traditional layout design, but also enables a compact structure and aesthetic function of the whole device, and makes device installation, battery swap operation and the like quite convenient, fast, safe and reliable.

Furthermore, in an alternative, the invention allows the control portion in the modular battery swap platform to be constructed to have two or more portions, so that these portions can be arranged at the rear and/or side (such as left or right side) of the modular battery swap platform, respectively, in order to better meet various practical application demands, for example, installation space may be limited in some situations.

Referring again to Fig. 3, in an alternative, one or more modules in the modular battery swap platform according to the invention may be constructed to have a frame structure, which can not only ensure the overall structural strength of the battery swap platform, but can also effectively save materials, and can be efficiently manufactured using various suitable processing techniques such as welding.

By way of example, one or more assembling members (such as threaded holes, nuts and bolts) may be disposed at the bottom of the frame structure of the module and used for securing the frame structure to an installation position (such as a work surface at an installation site). Furthermore, depending on the actual application demands, connecting members may also be disposed at the bottom, sides and/or top of the frame structure of some of the modules to serve to connect the modules together with modules adjacent thereto, thereby helping to further ensure and enhance the overall structural strength of the battery swap platform. Such connecting members may include, but are not limited to, for example, male and female structures matched with one another, bolts, nuts, screws, threaded holes, ties, etc.

In addition, the bottom and sides of the frame structure may be enclosed using, for example, steel plates, to form internal cavities for components and parts to be placed therein, thereby making the overall structure of the platform more compact and contributing to further enhancement of structural rigidity. Such components and parts include, but are not limited to, for example, components and parts required for the operation of each module itself (for example, components and parts, units, apparatuses, or devices used by the control portion 5 to perform vehicle battery swap control).

Besides, covering members may be disposed on tops of the frame structures of some modules according to actual demands, so that the above-mentioned internal cavities can be completely or partially enclosed, and can be opened, if necessary, to expose the internal cavities of the frame structures to the outside, so as to facilitate various operations such as installation, maintenance and replacement of the components and parts that may have been placed in the internal cavities. As shown in Fig. 1, in the given embodiment, a cover plate 20, a cover plate 30, a cover plate 40, and a cover plate 50 are configured on the front wheel positioning portion 2, the rear wheel positioning portion 3, the battery swap portion 4 and the control portion 5, respectively, which are configured as separate modules. With these cover plates, the structural strength of the modular battery swap platform can also be improved, moreover, components and parts possibly disposed in the internal cavities of the corresponding modules are protected.

It must be noted that, for each component module in the modular battery swap platform according to the invention, two or more thereof may be further combined and configured as one separate module without departing from the spirit of the invention, and of course, any one of the modules may be further disassembled and configured to consist of one or more modules, on which various potential flexible design, change and adjustment may be conducted according to practical applications.

For example, it is possible to combine both the ramp portion 1 and the front wheel positioning portion 1 as two separate modules in the example of Fig. 2 into one module, or to combine the front wheel positioning portion 2, the battery swap portion 4 and the rear wheel positioning portion 3 as three separate modules into one module, or to disassemble the control portion 5 as one separate module into two or more separate modules, so that various actual demands can be better fully met.

Since the battery swap system of the invention has these significant technical advantages over the prior art as described above, it is very suitable for application to a battery charging and swapping system (for example, various types of charging stations for battery swapping and charging, such as fixed charging stations and mobile charging stations) in order to overcome the defects and disadvantages existing in the prior art, including those described hereinbefore. According to one technical solution of the invention, provided is a battery charging and swapping system in which one or more battery swap platforms designed and provided according to the invention are disposed, and the specific number, position layout, etc. of the battery swap platforms can be flexibly set according to actual demands in different application scenarios.

In addition, according to another technical solution of the invention, further provided is a modular assembly for a battery swap platform, such modular assembly may comprise two or more modules configured to be detachably assembled together to form a modular battery swap platform designed and provided according to the invention. Thus, it is possible to provide these advantages over the prior art and good effects of the solution of the invention as discussed above.

Moreover, the invention further correspondingly provides a module for a battery swap platform, which can be manufactured separately and configured to form a module assembly designed and provided according to the invention as described above. As described previously, the specific structure, shape, number of such modules for constituting the module assembly, etc. can be flexibly selected and set according to the design idea of the invention without departing from the spirit of the invention.

The modular battery swap platform, the module assembly and modules for the battery swap platform, and the battery charging and swapping system according to the invention are merely illustrated in detail as above by way of example. These examples are for the purpose of illustrating the principle of the invention and the implementations thereof only, rather than limiting the invention. Those skilled in the art can make various variations and improvements without departing from the spirit and scope of the invention. Therefore, all equivalent technical solutions should fall within the scope of the invention and be defined by the claims of the invention.

## Claims

1. A modular battery swap platform, **characterized by** comprising at least two modules configured to be detachably assembled together so as to form the modular battery swap platform for battery swap of a vehicle.

2. The modular battery swap platform according to claim 1, **characterized in that** at least one of the modules is constructed as a frame structure, and the bottom of the frame structure is provided with an assembling member for fixing it to a mounting position.

3. The modular battery swap platform according to claim 2, **characterized in that** the bottom and sides of the frame structure are enclosed to form an internal cavity for components and parts to be placed therein, and the top of the frame structure is provided with a covering member configured to at least partially enclose the internal cavity and can be opened to expose the internal cavity to the outside; and/or
the bottom, sides and/or top of the frame structure is provided with connecting members configured to connect the modules with modules adjacent thereto.

4. The modular battery swap platform according to claim 1, 2 or 3, **characterized in that** the modular battery swap platform is provided with a ramp portion for a vehicle to enter or exit, a wheel positioning portion for wheel positioning operation, a battery swap portion for battery swap operation, and a control portion for controlling operation of the modular battery swap platform, and at least one of the ramp portion, the wheel positioning portion, the battery swap portion and the control portion is configured to have one or more of the modules, or at least two of these portions are configured together as one of the modules.

5. The modular battery swap platform according to claim 4, **characterized in that** the ramp portion and the control portion are arranged at the front and rear of the modular battery swap platform, respectively; or
the ramp portion includes a front ramp portion and a rear ramp portion arranged at the front and rear of the modular battery swap platform, respectively, and the control portion is arranged at the side of the modular battery swap platform.

6. The modular battery swap platform according to claim 4, **characterized in that** the ramp portion is configured to comprise at least two sections arranged to be at least partially stackable together.

7. The modular battery swap platform according to claim 4, **characterized in that** the wheel positioning portion is configured to include a front wheel positioning portion and a rear wheel positioning portion, which are arranged at the front and rear of the battery swap portion, respectively; and/or
the control portion is configured to include at least two portions arranged at the rear and/or the side of the modular battery swap platform, respectively.

8. A module assembly for a battery swap platform, **characterized by** comprising at least two modules configured to be detachably assembled together to form a modular battery swap platform as claimed in any one of claims 1-7.

9. A module for a battery swap platform, **characterized in that** the module is configured to constitute a module assembly as described in claim 8.

10. A battery charging and swapping system, **characterized by** comprising one or more modular battery swap platforms as claimed in any one of claims 1-7.
